(19) Europäisches Patentamt European Patent Office Office européen des brevets

(11) **EP 1 769 498 B1**

(12) **EUROPEAN PATENT SPECIFICATION**

(45) Date of publication and mention
of the grant of the patent:
**24.12.2008 Bulletin 2008/52**

(51) Int Cl.:
***G11B 7/09*** (2006.01)

(21) Application number: **05759083.8**

(22) Date of filing: **07.07.2005**

(86) International application number:
**PCT/IB2005/052257**

(87) International publication number:
**WO 2006/008686 (26.01.2006 Gazette 2006/04)**

(54) **IMPROVED TRACKING ERROR SIGNAL CALIBRATION METHOD, AND DISC DRIVE IMPLEMENTING SUCH METHOD**

VERBESSERTES KALIBRIERVERFAHREN FÜR SPURFOLGEFEHLERSIGNALE UND PLATTENLAUFWERK MIT DERARTIGEM IMPLEMENTIERTEM VERFAHREN

PROCEDE D'ETALONNAGE DE SIGNAL D'ERREUR DE POURSUITE AMELIORE, ET LECTEUR DE DISQUE APPLIQUANT CE PROCEDE

(84) Designated Contracting States:
**AT BE BG CH CY CZ DE DK EE ES FI FR GB GR HU IE IS IT LI LT LU LV MC NL PL PT RO SE SI SK TR**

(30) Priority: **14.07.2004 EP 04103372**

(43) Date of publication of application:
**04.04.2007 Bulletin 2007/14**

(73) Proprietor: **Koninklijke Philips Electronics N.V.**
**5621 BA Eindhoven (NL)**

(72) Inventor: **VAN DER HEIJDEN, Hendrikus, C., M.**
**NL-5656 AA Eindhoven (NL)**

(74) Representative: **Uittenbogaard, Frank**
**Philips**
**Intellectual Property & Standards**
**P.O. Box 220**
**5600 AE Eindhoven (NL)**

(56) References cited:
**US-A- 5 343 454          US-A- 5 504 726**
**US-A- 5 590 103          US-A- 5 926 445**
**US-A1- 2002 021 632**

**Description**

FIELD OF THE INVENTION

The present invention relates in general to a disc drive apparatus for writing/reading information into/from an optical storage disc; hereinafter, such disc drive apparatus will also be indicated as "optical disc drive".

More particularly, the present invention relates to a method for calibration and normalization of the tracking error signal.

BACKGROUND OF THE INVENTION

As is commonly known, an optical storage disc comprises at least one track, either in the form of a continuous spiral or in the form of multiple concentric circles, of storage space where information may be stored in the form of a data pattern. Optical discs may be read-only type, where information is recorded during manufacturing, which information can only be read by a user. An optical storage disc may also be a writable type, where information may be stored by a user. For writing information in the storage space of the optical storage disc, or for reading information from the disc, an optical disc drive comprises, on the one hand, rotating means for receiving and rotating an optical disc, and on the other hand optical scanning means. Since the technology of optical discs in general, the way in which information can be stored in an optical disc, and the way in which optical data can be read from an optical disc, is commonly known, it is not necessary here to describe this technology in more detail.

For rotating the optical disc, an optical disc drive typically comprises a motor, which drives a hub engaging a central portion of the optical disc. Usually, the motor is implemented as a spindle motor, and the motor-driven hub may be arranged directly on the spindle axle of the,motor.

For optically scanning the rotating disc, an optical disc drive comprises a light beam generator device (typically a laser diode), means (such as an objective lens) for focussing the light beam in a focal spot on the disc, and an optical detector for receiving the reflected light reflected from the disc and for generating an electrical detector output signal. The optical detector usually comprises multiple detector segments, each segment providing an individual segment output signal.

During operation, the light beam should remain focussed on the disc. To this end, the objective lens is arranged axially displaceable, and the optical disc drive comprises focal actuator means for controlling the axial position of the objective lens. Further, the focused light spot should remain aligned with a track or should be capable of being displaced from a current track to a new track. To this end, at least the objective lens is mounted radially displaceable, and the optical disc drive comprises radial actuator means for controlling the radial position of the objective lens.

For track following, i.e. for keeping the beam focus point aligned with a track, the optical disc drive comprises a radial servo system, capable of determining any deviation between actual focus position and desired focus position, indicated as tracking error, and to control the radial position of the focus point such said tracking error is as small as possible, preferably zero. A control circuit receives the electrical detector output signal, and derives therefrom a tracking error signal, representing the actual value of the tracking error. On the basis of this tracking error signal, the control circuit generates a control signal for the radial actuator. Since tracking error signals, and radial servo systems using such tracking error signals as input signals, are known per se, it is not necessary here to explain this in large detail.

Ideally, the tracking error signal is a function of the actual value of the tracking error only, i.e. for the same value of a tracking error, the tracking error signal always has the same signal value. In practice, however, this is not the case: for several reasons, the relationship between tracking error and tracking error signal may vary over the surface of a storage disc. In order to obtain a predictable servo system, it is desirable that the same tracking error results in the same servo action, thus it is desirable that the control circuit receives or calculates a tracking error signal which is not, or at least less, sensitive to variations of said relationship.

To this end, it is known to perform, in an initialization stage, a plurality of calibration procedures in respect of a predetermined number of predefined disc zones (radial portions of the storage space). In each disc zone, the amplitude of the tracking error signal is measured, and the measured amplitude is stored in a memory. Later, in operation, a measured tracking error signal is compared to the stored tracking error signal amplitude of the corresponding zone in order to obtain a normalized tracking error signal, and a radial control signal for the radial actuator is generated on the basis of the normalized tracking error signal.

The concept of using a normalized tracking error signal works quite well. However, a disadvantage of this known process of dividing the disc into a plurality of zones and performing calibration procedures (tracking error signal amplitude measurements) in each of those zones, during the start-up phase of the disc, is that it is rather time consuming: each measurement may take about 200 ms, and the number of zones may be in the order of about 10. This adds to the time a user must wait before he can use the disc.

A further problem is that a compromise must be found between the desire of reduced time consumption during initialization and the desire of improved accuracy. The duration of the initialization process can be reduced by reducing the number of zones, but the pay-off is that the size of the zones increases and the tracking error signal amplitude as measured is less accurate for the entire zone.

In an attempt to solve these problems, US-A-5.504.726 has already proposed to measure the tracking error signal amplitude during track jumping. According to this publication, the tracking error signal amplitude is determined as being the maximum amplitude as measured during a large jump with a plurality of track crossings, or as being the maximum amplitude as measured during three successive one-track jumps.

A disadvantage of the method proposed by US-A-5.504.726 is that the method is very sensitive to disc imperfections such as scratches. A scratch may have an effect that the amplitude of the tracking error signal is reduced or increased as compared to the "norman" value, i.e. the value which the amplitude of the tracking error signal would have had without the presence of such scratch. Since, in the known method, the tracking error signal amplitude to be used for normalization is actually the amplitude corresponding to one track crossing, namely the one track crossing with the largest amplitude, it is very likely that, in the case of a scratch, a "wrong" amplitude is taken.

This disadvantage is increased by the fact that, when the jump has terminated, the prior art system immediately uses said largest amplitude for normalization. In other words, a normalization value is calculated only on the basis of track crossing results obtained during one jump. So, if during a jump a "wrong" amplitude is taken as amplitude for normalization, the further reading or writing process is immediately affected.

US 5,926,445 discloses a waveform controlling device for a tracking error signal in which an unbalanced waveform of a tracking error signal is automatically corrected within a short period of time. A peak value and a bottom value of a tracking error signal are obtained by a peak-hold circuit and a bottom-hold circuit, respectively. Based on the peak value and the bottom value, an amount of offset measured from a reference level and an amplitude of the tracking error signal are computed. An adjustment value is computed for correcting, the unbalance between the peak value and the bottom value based on the amount of offset and the amplitude of the tracking error signal. The adjustment value is fed back to a tracking balance circuit so that the waveform of the unbalanced waveform of the tracking error signal is corrected.

An important objective of the present invention is to provide a calibration method where the above problem is eliminated or at least reduced.

More specifically, the present invention aims to provide a calibration method which is less sensitive to scratches.

SUMMARY OF THE INVENTION

According to an important aspect of the present invention, a jump is performed over a plurality of tracks, and a one-jump normalization value is calculated on the basis of a plurality of track crossings during this jump. This process is repeated for a plurality of jumps, each jump leading to a corresponding one-jump normalization value being calculated. A multi-jump calibration value is calculated on the basis of the plurality of one-jump normalization values calculated for said plurality of jumps. Thus, the calculated one-jump normalization value of each jump contributes to the multi-jump calibration value. Errors in an individual one-jump normalization value, for instance caused by scratches, have less influence on the value of the multi-jump calibration value.

In a possible embodiment, the multi-jump calibration value is calculated as the average of a number of one-jump normalization values.

In another possible embodiment, the multi-jump calibration value is calculated by increasing the multi-jump calibration value if a new jump provides a one-jump normalization value larger than a reference value, and by decreasing the multi-jump calibration value if a new jump provides a one-jump normalization value smaller than the reference value. The value of increase and the value of decrease may be constant, but they may also be proportional to the difference between current one-jump normalization value and reference value.

BRIEF DESCRIPTION OF THE DRAWINGS

These and other aspects, features and advantages of the present invention will be further explained by the following description with reference to the drawings, in which same reference numerals indicate same or similar parts, and in which:

Figure 1 schematically illustrates relevant components of an optical disc drive apparatus;
Figure 2A is a graph schematically illustrating a characteristic TES curve during consecutive track crossings.
Figure 2B is a graph similar to Figure 2A, on a larger time-scale, illustrating a possible disturbance situation;
Figure 3 is a block diagram illustrating a first embodiment of a processing circuit;
Figure 4 is a block diagram illustrating a second embodiment of a processing circuit.

DETAILED DESCRIPTION OF THE INVENTION

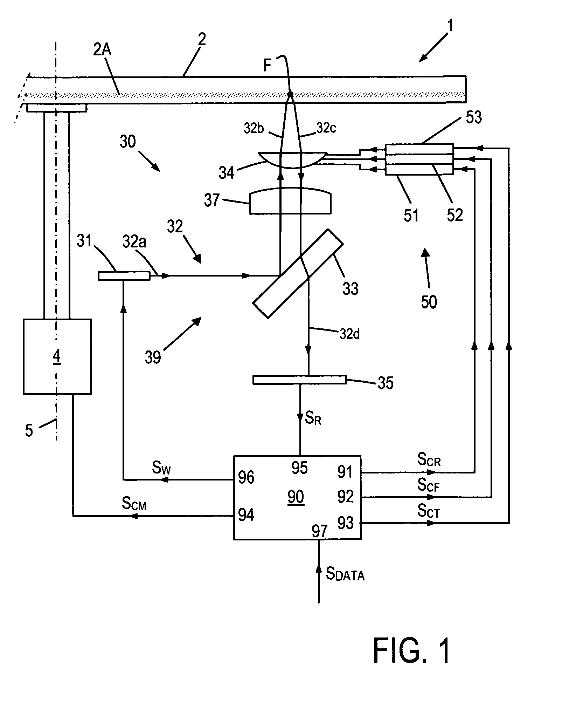

Figure 1 schematically illustrates an optical disc drive apparatus 1, suitable for storing information on and reading information from an optical disc 2, typically a DVD or a CD. The disc 2, of which the thickness is shown in an exaggerated way, has at least one storage layer 2A. For rotating the disc 2, the disc drive apparatus 1 comprises a motor 4 fixed to a frame (not shown for the sake of simplicity), defining a rotation axis 5.

The disc drive apparatus 1 further comprises an optical system 30 for scanning tracks (not shown) of the disc 2 by an optical beam. More specifically, in the exemplary arrangement illustrated in Figure 1, the optical system 30 comprises a light beam generating means 31, typically a laser such as a laser diode, arranged to generate a light beam 32. In the following, different sections of the light beam 32, following an optical path 39, will be indicated by a character a, b, c, etc. added to the reference numeral 32.

The light beam 32 passes a beam splitter 33, a collimator lens 37 and an objective lens 34 to reach (beam 32b) the disc 2. The light beam 32b reflects from the disc 2 (reflected light beam 32c) and passes the objective lens 34, the collimator lens 37 and the beam splitter 33 (beam 32d) to reach an optical detector 35. The objective lens 34 is designed to focus the light beam 32b in a focus spot F on the storage layer 2A.

The disc drive apparatus 1 further comprises an actuator system 50, which comprises a radial actuator 51 for radially displacing the objective lens 34 with respect to the disc 2. Since radial actuators are known per se, while the present invention does not relate to the design and functioning of such radial actuator, it is not necessary here to discuss the design and functioning of a radial actuator in great detail.

For achieving and maintaining a correct focusing, exactly on the desired location of the disc 2, said objective lens 34 is mounted axially displaceable, while further the actuator system 50 also comprises a focus actuator 52 arranged for axially displacing the objective lens 34 with respect to the disc 2. Since focus actuators are known per se, while further the design and operation of such focus actuator is no subject of the present invention, it is not necessary here to discuss the design and operation of such focus actuator in great detail.

For achieving and maintaining a correct tilt position of the objective lens 34, the objective lens 34 may be mounted slantingly; in such case, as shown, the actuator system 50 also comprises a tilt actuator 53 arranged for pitching the objective lens 34 with respect to the disc 2. Since tilt actuators are known per se, while further the design and operation of such tilt actuator is no subject of the present invention, it is not necessary here to discuss the design and operation of such tilt actuator in great detail.

It is further noted that means for supporting the objective lens with respect to an apparatus frame, and means for axially and radially displacing the objective lens, as well as means for pitching the objective lens, are generally known per se. Since the design and operation of such supporting and displacing means are no subject of the present invention, it is not necessary here to discuss their design and operation in great detail.

It is further noted that the radial actuator 51, the focus actuator 52 and the tilt actuator 53 may be implemented as one integrated actuator.

The disc drive apparatus 1 further comprises a control circuit 90 having a first output 91 coupled to a control input of the radial actuator 51, having a second output 92 coupled to a control input of the focus actuator 52, having a third output 93 coupled to a control input of the tilt actuator 53, having a fourth output 94 coupled to a control input of the motor 4, and having a fifth output 96 coupled to a control input of the laser device 31. The control circuit 90 is designed to generate at its first output 91 a control signal $S_{CR}$ for controlling the radial actuator 51, to generate at its second control output 92 a control signal $S_{CF}$ for controlling the focus actuator 52, to generate at its third output 93 a control signal $S_{CT}$ for controlling the tilt actuator 53, to generate at its fourth output 94 a control signal $S_{CM}$ for controlling the motor 4, and to generate at its fifth output 96 a control signal Sw for controlling the laser.

The control circuit 90 further has a read signal input 95 for receiving a read signal $S_R$ from the optical detector 35. The optical detector 35 may actually comprise several individual detector elements, as is known per se, and the read signal $S_R$ may actually consist of several individual detector element output signals, as is also known per se. Further, the read signal input 95 may actually comprise several individual input signal terminals, each one receiving a corresponding one of the detector element output signals, as is also known per se.

The control circuit 90 is designed to process individual detector element output signals to derive one or more error signals. A radial error signal or tracking error signal, designated hereinafter simply as TES, indicates the radial distance between a track and the focus spot F. A focus error signal, designated hereinafter simply as FES, indicates the axial distance between the storage layer and the focus spot F. It is noted that, depending on the design of the optical detector, different formulas for error signal calculation may be used.

In a reading mode, the intensity of the laser beam 32 is kept substantially constant, and variations in intensity of the individual detector element output signals received at the read signal input 91 reflect the data content of the track being read. The control circuit 90 further comprises a data input 97. In a writing mode, the control circuit 90 generates a control signal $S_w$ for the laser 31 on the basis of a data signal $S_{DATA}$ received at its data input 97, so that the laser beam intensity fluctuates for writing a pattern corresponding to the input data. Distinct intensity levels are also used for erasing a rewritable disc, which may take place while overwriting the existent data or as a stand-alone process that blanks the disc.

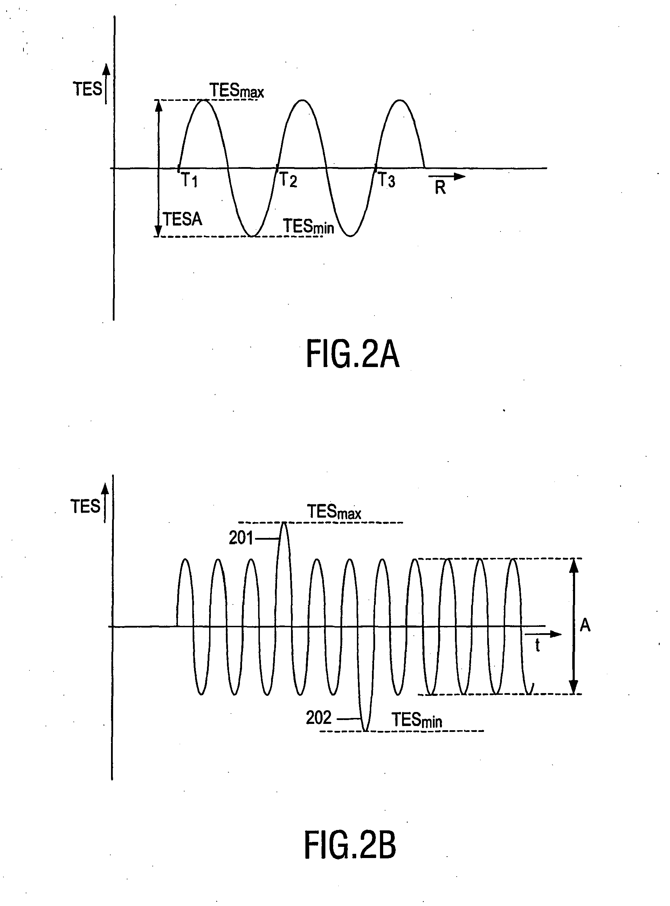

Figure 2A is a graph schematically illustrating the behaviour of TES when the disc drive apparatus 1 performs a jump, i.e. when the focus spot F is displaced radially to go to a certain target track. During the travel towards the target track, the focus spot F crosses tracks; at each track crossing, indicated T1, T2, T3 in Figure 2A, TES becomes zero. After having passed a track, TES reaches a maximum positive value TESmax and a maximum negative value TESmin before crossing the next track. The graphical representation of the TES behaviour is indicated as characteristic TES curve; it is noted that the shape of such characteristic TES curve is known to a person skilled in the art, and needs no further explanation.

The control circuit 90 is designed to generate its actuator control signals as a function of the error signals, to reduce the corresponding error, as will be clear to a person skilled in the art. However, due to variations in disc parameters, the value of TES for a certain tracking error may be different in different locations on the disc, and as a consequence, the value of TES per se is not a good indication of the actual value of the tracking error. It is possible to derive a normalised tracking error signal, indicated hereinafter as TESN, in accordance with formula (1):

$$\mathrm{TESN = TES / TESA} \qquad\qquad (1)$$

wherein TESA is a value representing the amplitude of TES according to formula (2):

$$\mathrm{TESA = TESmax - TESmin} \qquad\qquad (2)$$

Local variations will have a similar influence on both TES and TESA, so that TESN will be independent from such local variations.

Figure 2B is a graph similar to Figure 2A, on a different time-scale, illustrating a problem of prior art. Figure 2B shows a TES curve corresponding to a larger number of track crossings, wherein the amplitude is practically constant. However, due to imperfections such as scratches, the curve shows a positive peak 201 having excessive peak value TESmax, and shows a negative peak 202 having excessive peak value TESmin. At the end of the jump, a one-jump normalization value TESA is calculated in accordance with formula (2), and this one-jump normalization value TESA is used for normalizing the error signals during the reading and writing process until the next jump. It should be clear that this one-jump normalization value TESA does not correspond to the actual amplitude as indicated at A, so a bad reading or writing quality may result during the entire reading or writing process until the next jump as a consequence of only one or two scratches encountered during the jump, even if the region where the reading or writing process takes place is completely without scratch.

According to the present invention, this problem is avoided or at least reduced when the control circuit 90 uses a normalised tracking error signal TESN in accordance with formula (3):

$$\mathrm{TESN = TES / TESM} \qquad\qquad (3)$$

wherein TESM is a multi-jump calibration value calculated on the basis of a plurality of one-jump normalization values, i.e. a plurality of jumps contribute to the multi-jump calibration value TESM.

The present invention relates to the use of multi-jump calibration values, calculated on the basis of one-jump normalization values, and can be implemented whatever the nature of the one-jump normalization values, i.e. even when the one-jump normalization values, each calculated on the basis of the track crossing signals obtained during the corresponding jump, are calculated in accordance with the prior art calculation method. Therefore, in the following, it is not necessary to explain a method for calculating a one-jump normalization value. Nevertheless, in a copending application, the present applicant describes an improved method for calculating a one-jump normalization value; it is noted that the present invention is preferably implemented while taking such improved one-jump normalization values as basis for calculating the multi-jump calibration values.

In the following, a multi-jump calibration value will be indicated as TESM, while a one-jump normalization value, obtained in any way, will be indicated as TESA.

In the following, if a value X is a function of N measurements m{1}, m{2}, m{3}, .... m{N}, this may be indicated as X = f(m{1}, m{2}, m{3}, .... m{N}), but it is briefly indicated as X = f[i=1 to N](m{i}).

Thus, according to an important aspect of the present invention, a multi-jump calibration value TESM is calculated on the basis of a plurality of N one-jump normalization values TESA {i} according to formula (4):

$$TESM = f[i=1 \text{ to } N](TESA\{i\})$$

Preferably, the function f is an averaging function according to

$$f[i = 1 \, to \, N](m\{i\}) = \frac{1}{N} \sum_{i=1}^{N} m\{i\} \qquad\qquad (5)$$

but f may also be a function which results in a good approximation of an average.

The exact value of N is not critical, although N should preferably not be chosen too large. A suitable value for N is in the order of 10.

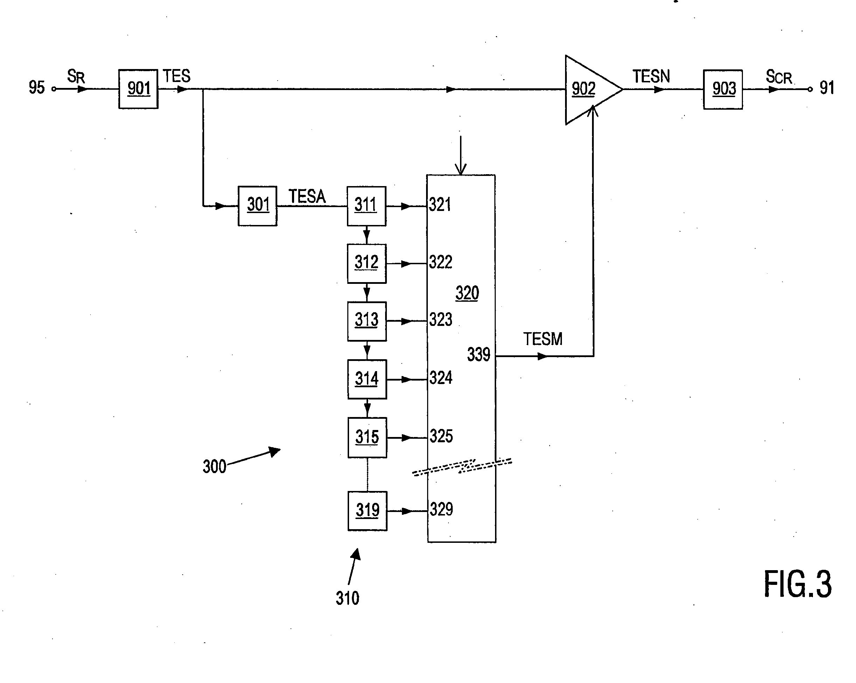

Figure 3 is a block diagram of a first embodiment of a processing circuit 300, part of the control circuit 90.

A TES calculating block 901 of the control circuit 90 receives the detector output $S_R$, and calculates the tracking error signal TES according to a predefined formula. The processing circuit 300 comprises a first processing block 301 receiving the tracking error signal TES. The first processing block 301 is designed to calculate a one-jump normalization value TESA on the basis of the behaviour of TES during a jump.

The processing citcuit 300 further comprises a memory array 310, comprising N memory locations 311, 312, 313, 314, 315, ..., 319, organized as a shift register. The first memory location 311 has an input coupled to an output of the first processing block 301, thus receiving the one-jump normalization value TESA. Each memory location 311, 312, 313, 314, ... has an output coupled to an input of the next memory location 312, 313, 314, 315, ....

The processing citcuit 300 further comprises a second processing block 320, having a plurality of N inputs 321, 322, 323, 324, 325, .... 329, coupled to outputs of the memory locations 311, 312, 313, 314, 315,... 319, respectively, and having an output 339 for providing a multi-jump calibration value TESM. The second processing block 320 is designed to calculate the multi-jump calibration value TESM on the basis of the input signals received at its N inputs 321, 322, 323, 324, 325, ...., 329, and to provide this multi-jump calibration value TESM at output 339.

A controllable gain amplifier 902 of the control circuit 90 receives the TES as input signal, and receives the multi-jump calibration value TESM from the second processing block 320 of the processing circuit 300. The controllable gain amplifier 902 is designed to set its gain such that a normalized output signal TESN is generated, equal to or proportional to TES/TESM. The control signal $S_{CR}$ is generated by a further processing block 903 on the basis of the normalized tracking error signal TESN.

During operation, whenever a jump is terminated, the memory contents of the memory locations 311, 312, 313, 314, .... is shifted to the next memory location 312; 313, 314, 315, respectively, and the output signal TESA of the first processing block 301 is stored in the first memory location 311. The contents of the last memory location 319 is disregarded. So, the second processing block 320 always calculates the multi-jump calibration value TESM on the basis of the last N one-jump normalization values TESA obtained during N previous jumps, preferably by way of averaging. It should be clear that the multi-jump calibration value TESM, and hence the behaviour of the system as a whole, does not change abruptly if one strongly deviating one-jump normalization value TESA is obtained. Thus, the system as a whole is quite robust.

At the start of a reading/writing process, the memory locations 311 ... 319 may be empty, or may contain irrelevant information which should be ignored. This can be achieved in different ways.

In one example, during an initialization procedure when a new disc has been introduced, or as part of a first step of performing a reading/writing operation, a first jump may be performed, and the first one-jump normalization value TESA obtained from this first jump may be stored into all memory locations 311 ... 319. Then, procedure continues as described above.

In another example, the second processing block 320 comprises a counter (not shown), counting the number of jumps which have been performed during one reading or writing operation. As long as this number N(jumps) is smaller than the number of memory locations, the second processing block 320 is designed to calculate TESM on the basis of the output signals of the first N(jumps) memory locations.

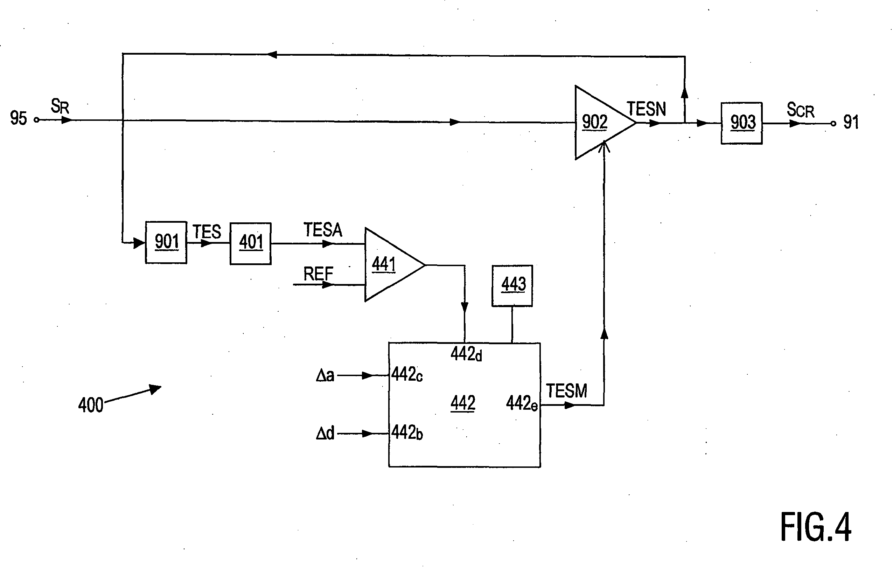

In the embodiment of Figure 3, the results of N jumps are actually calculated, memorized, and processed in order to calculate a multi-jump calibration value. This approach requires the use of N memory locations. In an alternative approach, which basically only requires one memory location for storing the current value of the multi-jump calibration value, the one-jump normalization value resulting from the latest jump is compared with the current value of the multi-jump calibration value. A new value of the multi-jump calibration value is calculated by increasing the multi-jump calibration value with a predetermined value if the new one-jump normalization value is larger than the current value of the multi-jump calibration value, or by decreasing the multi-jump calibration value with a predetermined value if the new one-jump normalization value is smaller than the current value of the multi-jump calibration value, as will be explained in the following with reference to Figure 4.

Figure 4 is a block diagram of a second embodiment of a processing circuit 400, part of the control circuit 90.

A controllable gain amplifier 902 of the control circuit 90 receives the detector output $S_R$, and calculates a signal TESN as will be described later. A TES calculating block 901 of the control circuit 90 receives this signal TESN, and calculates the tracking error signal TES according to a predefined formula. The processing circuit 400 comprises a first processing block 401 receiving the tracking error signal TES. The first processing block 401 is designed to calculate a one-jump normalization value TESA on the basis of the behaviour of TES during a jump.

The processing circuit 400 further comprises a controllable adder 442, having an output 442e for providing a multi-jump calibration value TESM.

The processing circuit 400 further comprises a comparator 441. At a first input terminal, the comparator 441 receives the a one-jump normalization value TESA from first processing block 401, and at a second input terminal, the comparator 441 receives a reference value REF.

The controllable adder 442 has a first input 442b receiving a predetermined addition value $\Delta a$, and has a second input 442c receiving a predetermined subtraction value $\Delta d$. The controllable adder 442 has a control input 442d receiving an output signal from the comparator 441.

On start-up of the disc drive 1, the controllable adder 442 may be set to a predetermined initial value, wchich may be a fixed value stored in a memory 443 associated with the controllable adder 442.

During operation of the disc drive 1, when a jump is performed, the first processing block 401 performs a calibration process and calculates a one-jump normalization value TESA.

On termination of the jump, the comparator 441 receives the one-jump normalization value TESA and compares TESA with the reference value REF. Depending on the result of the comparison, the controllable adder 442 increases its output signal TESM by the predetermined addition value $\Delta a$ or decreases the output signal TESM by the predetermined subtraction value $\Delta d$. More particularly, if the output signal from the comparator 441 indicates that the input signal TESA is larger than the reference value REF, the adder 442 adds the value $\Delta a$ received at its first input 442b to the value TESM at its output terminal 442e. On the other hand, if the output signal from the comparator 441 indicates that the input signal TESA is smaller than the reference value REF, the adder 442 subtracts the value $\Delta d$ received at its second input 442c from the value TESM at its output terminal 442e. If the input signal TESA is equal to the reference value REF, TESM is left unchanged.

The controllable gain amplifier 902 of the control circuit 90 receives the detector output signal $S_R$ as input signal, and receives the multi-jump calibration value TESM from the controllable adder 442 of the processing circuit 400. The controllable gain amplifier 902 is designed to set its gain such that a normalized output signal TESN is generated, equal to or proportional to $S_R$/TESM. The control signal $S_{CR}$ is generated by a further processing block 903 on the basis of the normalized tracking error signal TESN.

It should be clear that, at any moment, the current output value TESM depends on the historic development of TESA over a plurality of jumps, and approaches an average of TESA. It should further be clear that an individual anomaly of a TESA, for instance caused by a scratch, has a reduced influence on the eventual output signal TESM.

It is to be noted that the actual values of $\Delta a$ and $\Delta d$ have an influence on the overall behaviour of the system, and should be suitably set in relationship to the amplitude of TES to be expected, and in relationship to the sample frequency and the track.

Normally, it is to be preferred that $\Delta a$ is equal to $\Delta d$.

In the above, it has been explained that, in order to normalize a tracking error signal, a calibration value is calculated on the basis of calibration results obtained in a plurality of N jumps. This plurality may be equal to two jumps, but preferably the number of jumps is higher, for instance in the order of 10 or more; the higher this number, the better a disadvantageous effect of scratches will be dampened.

In principle, it is possible to achieve the plurality of N jumps by jumping to a target location and back to the starting location N/2 times, before continuing the reading or writing process. Jumps may even be made to arbitrary intermediate locations. This strategy is, however, not preferred. It is intended that a jump is made to a target location, the reading/writing process continues, until a next jump may prove to be necessary.

It should be clear to a person skilled in the art that the present invention is not limited to the exemplary embodiments discussed above, but that several variations and modifications are possible within the protective scope of the invention as defined in the appending claims.

For instance, it is possible that $\Delta a$ and $\Delta d$ are adjustable.

In the above, the present invention has been explained with reference to block diagrams, which illustrate functional blocks of the device according to the present invention. It is to be understood that one or more of these functional blocks may be implemented in hardware, where the function of such functional block is performed by individual hardware components, but it is also possible that one or more of these functional blocks are implemented in software, so that the function of such functional block is performed by one or more program lines of a computer program or a programmable device such as a microprocessor, microcontroller, digital signal processor, etc.

**Claims**

1. Method for driving a radial actuator (51) in an optical disc drive (1), comprising the steps of:

   (a) during normal operation (reading process; writing process), receiving a read signal ($S_R$) from an optical detector (35);
   (b) deriving from the read signal ($S_R$) a tracking error signal TES;
   (c) performing a jump from a current track to a target track; **characterized by**:
   (d) at the end of the jump, calculating a one-jump normalization value TESA, which is a value representing the amplitude, TESmax - TESmin, of the tracking error signal TES, experienced during the jump, wherein TESmax and TESmin are respectively the maximum and minimum value of the tracking error signal TES experienced during the jump;
   (e) repeating the steps (c) and (d) to obtain a plurality of one-jump normalization values TESA(i);
   (f) calculating a multi-jump calibration value TESM as an approximation of the average of contributing one-jump normalization values TESA(i);
   (g) in a track following mode, calculating a normalized tracking error signal TESN according to the formula TESN = TES/TESM;
   calculating from the normalized tracking error signal TESN a radial control signal ($S_{CR}$); and
   using the radial control signal ($S_{CR}$) for controlling the radial actuator (51) such as to reduce the tracking error.

2. Method according to claim 1, wherein a disc reading process or disc writing process is executed between respective jumps.

3. Method according to claim 1, further comprising the steps of:

   - in a track following mode, calculating a tracking error signal (TES), and
   - calculating a normalized tracking error signal (TESN) on the basis of the tracking error signal (TES) and the multi-jump calibration value (TESM).

4. Method according to claim 3, further comprising the steps of:

   - performing a jump from a current track to a target track;
   - calculating a one-jump normalization value (TESA) corresponding to this Jump;
   - updating the multi-jump calibration value (TESM) on the basis of this one-jump normalization value (TESA);
   - resuming the track following mode;
   - in this resumed track following mode, calculating a tracking error signal (TES), and
   - calculating a normalized tracking error signal (TESN) on the basis of the tracking error signal (TES) and the updated multi-jump calibration value (TESM).

5. Method according to claim 1, wherein the actual values of one-jump normalization values (TESA(i)) are stored in respective memory locations (311-319) of a memory (310), and wherein the multi-jump calibration value (TESM) is calculated on the basis of a predetermined number (N) of stored values from memory, N being larger than 1, N preferably being in the order of 10 or more.

6. Method according to claim 5, wherein said memory (310) is implemented as a shift memory, having its input receiving the most recent one-jump normalization value (TESA);
   and wherein, after each jump, the contents of said memory (310) is shifted one place.

7. Method according to claim 1, wherein, after each jump, the multi-jump calibration value (TESM) is updated by increasing the multi-jump calibration value (TESM) if the new one-jump normalization value (TESA) is larger than a predetermined reference value (REF), or by decreasing the multi-jump calibration value (TESM) if the new one-jump normalization value (TESA) is smaller than the predetermined reference value (REF).

EP 1 769 498 B1

8. Method according to claim 1, wherein the multi-jump calibration value (TESM) is calculated by increasing the current multi-jump calibration value by an addition value ($\Delta a$) if a new jump provides a one-jump normalization value (TESA) larger than a predetermined reference value (REF), or by decreasing the current multi-jump calibration value by a subtraction value ($\Delta d$) if a new jump provides a one-jump normalization value smaller than the predetermined reference value (REF).

9. Method according to claim 8, wherein the addition value ($\Delta a$) and the subtraction value ($\Delta d$) are predetermined constant values.

10. Method according to claim 8, wherein the addition value ($\Delta a$) and the subtraction value ($\Delta d$) are proportional to the difference between current one-jump normalization value and reference value (REF).

11. Method according to claim 8, wherein the addition value ($\Delta a$) and the subtraction value ($\Delta d$) are equal to each other.

12. Method according to claim 1, comprising the following steps:

a) starting a reading or writing procedure;
b) providing an initial value for the multi-jump calibration value (TESM);
c) providing addition and subtraction values ($\Delta a$, $\Delta d$);
d) if required by the reading or writing procedure, performing a jump to a target track;
e) during the jump, performing calibration measurements, and at the termination of the jump, providing a one-jump normalization value (TESA);
f) if the one-jump normalization value (TESA) is higher than a reference value (REF), increasing the multi-jump calibration value (TESM) by the addition value ($\Delta a$), or, if the one-jump normalization value (TESA) is lower than the reference value (REF), decreasing the multi-jump calibration value (TESM) by the subtraction value ($\Delta d$).

13. Method according to claim 12, wherein the addition value ($\Delta a$) is approximately equal to the subtraction value ($\Delta d$).

14. Method according to claim 1, wherein, in each jump, the one-jump normalization value (TESA) is calculated on the basis of a plurality of track crossings during this jump.

15. Disc drive apparatus (1) for writing or reading an optical disc (2), comprising:

means (4) for receiving and rotating the optical disc (2);
a light beam generating means (31) for generating a light beam (32);
an objective lens (34) for focussing the light beam in a focus spot (F) on the disc;
an optical detector (35) for receiving the light beam as reflected from the disc and generating a read signal ($S_R$);
a radial actuator (51) for radially displacing the objective lens (34) with respect to the disc;
a control circuit (90) having a read signal input (95) for receiving the read signal ($S_R$) from the optical detector (35), and a first output (91) coupled to a control input of the radial actuator (51);
wherein the control circuit (90) is designed to perform the following steps:

(a) during normal operation (reading process; writing process), receiving the read signal ($S_R$) from the optical detector (35);
(b) deriving from the read signal ($S_R$) a tracking error signal TES;
(c) driving the radial actuator (51) to have the focus spot (F) perform a jump from a current track to a target track; **characterized in that** the control circuit (90) is designed to perform the further steps:
(d) at the end of the jump, calculating a one-jump normalization value TESA, which is a value representing the amplitude, TESmax - TESmin, of the tracking error signal TES, experienced during the jump, wherein TESmax and TESmin are respectively the maximum and minimum value of the tracking error signal TES experienced during the jump;
(e) repeating the steps (c) and (d) to obtain a plurality of one-jump normalization values TESA(i);
(f) calculating a multi-jump calibration value TESM as an approximation of the average of contributing one jump normalization values TESA(i);
(g) in a track following mode, calculating a normalized tracking error signal TESN according to the formula TESN = TES/TESM,
calculating from the normalized tracking error signal TESN a radial control signal ($S_{CR}$); and
outputting the radial control signal ($S_{CR}$) at its first output (91) for controlling the radial actuator (51) such

9

as to reduce the tracking error.

16. Disc drive apparatus (1), adapted to perform the method according to any of claims 1-15.


**Patentansprüche**

1. Verfahren zum Antreiben eines radialen Stellgliedes (51) in einem optischen Plattenlaufwerk (1), wobei dieses Verfahren die nachfolgenden Verfahrensschritte umfasst;

   (a) im normalen Betrieb (Ausleseprozess; Schreibprozess) das Empfangen eines Lesesignals ($S_R$) von einem optischen Detektor (35);
   (b) das Herleiten eines Spurfolgefehlersignals TES aus dem Lesesignal ($S_R$),
   (c) das Durchführen eines Sprunges von einer aktuellen Spur in eine Zielspur;
   **dadurch gekennzeichnet, dass**
   (d) am Ende des Sprunges ein Einzelsprung-Normalisierungswert TESA berechnet wird, der ein Wert ist, der die Amplitude, TESmax - TESmin, des Spurfolgefehlersignals TES darstellt, erfahren während des Sprunges, wobei TESmax und TESmin der maximale bzw. minimale Wert des Spurfolgefehlersignals TES ist, erfahren während des Sprunges;
   (e) die Verfahrensschritte (c) und (d) wiederholt werden, und zwar zum Erhalten von Einzelsprung-Normalisierungswerten TESA(i);
   (f) ein Mehrfachsprung-Kalibrierungswert TESM als eine Annäherung des Mittelwertes des Beitrags von Einzelsprung-Normalisierungswerten TESA(i) berechnet wird;
   (g) in einer Spurfolgemode ein normalisiertes Spurfolgefehlersignal TESN entsprechend der Formel TESN = TES/TESM berechnet wird;

   wobei aus dem normalisierten Spurfolgefehlersignal TESN ein radiales Steuersignal $S_{CR}$) berechnet wird; und wobei das radiale Steuersignal ($S_{CR}$) zur Steuerung des radialen Stellgliedes (51) zum Reduzieren des Spurfolgefehlers benutzt wird.

2. Verfahren nach Anspruch 1, wobei ein Plattenausleseprozess oder ein Plattenbeschreibungsprozess zwischen betreffenden Sprüngen durchgeführt wird.

3. Verfahren nach Anspruch 1, wobei dieses Verfahren weiterhin die nachfolgenden Verfahrensschritte umfasst:

   - in einer Spurfolgemode das Berechnen eines Spurfolgefehlersignals (TES), und
   - das Berechnen eines normalisierten Spurfolgefehlersignals (TESN), und zwar auf Basis des Spurfolgefehlersignals (TES) und des Mehrfachsprung-Kalibrierungswertes (TESM).

4. Verfahren nach Anspruch 3, wobei dieses Verfahren weiterhin die nachfolgenden Verfahrensschritte umfasst:

   - das Durchführen eines Sprung von einer aktuellen Spur in eine Zielspur;
   - das Berechnen eines Einzelsprung-Normalisierungswertes (TESA), der diesem Sprung entspricht;
   - das Aktualisieren des Mehrfachsprung-Kalibrierungswertes (TESM), und zwar auf Basis dieses Einzelsprung-Normalisierungswertes (TESA);
   - das Wiederaufnahmen der Spurfolgemode;
   - in dieser wieder aufgenommenen Spurfolgemode das Berechnen des Spurfolgefehlersignals (TES), und
   - das Berechnen eines normalisierten Spurfolgefehlersignals (TESN), und zwar auf Basis des Spurfolgefehlersignals (TES) und des aktualisierten Mehrfachsprung-Kalibrierungswertes (TESM).

5. Verfahren nach Anspruch 1, wobei die wirklichen Werte der Einzelsprung-Normalisierungswerte (TESA(i)) an betreffenden Speicherstellen (311-319) eines Speichers (310) gespeichert werden, und wobei der Mehrfachsprung-Kalibrierungswert (TESM) auf Basis einer vorbestimmten Anzahl (N) gespeicherter Werte aus dem Speicher berechnet werden, wobei N größer ist als 1, wobei N vorzugsweise in der Größenordnung von 10 oder mehr liegt.

6. Verfahren nach Anspruch 5, wobei der genannte Speicher (310) als ein Schiebespeicher implementiert ist, dessen Eingang den jüngsten Einzelsprung-Normalisierungswert (TESA) empfängt;
   und wobei nach jedem Sprung der Inhalt des genannten Speichers (310) um eine Stelle verschoben wird.

**EP 1 769 498 B1**

**7.** Verfahren nach Anspruch 1, wobei nach jedem Sprung der Mehrfachsprung-Kalibrierungswert (TESM) durch Steigerung des Mehrfachsprung-Kalibrierungswertes (TESM) aktualisiert wird, wenn der neue Einzelsprung-Normalisierungswert (TESA) größer ist als ein vorbestimmter Bezugswert (REF), oder durch Verringerung des Mehrfachsprung-Kalibrierungswertes (TESM), wenn der neue Einzelsprung-Normalisierungswert (TESA) kleiner ist als der vorbestimmte Bezugswert (REF).

**8.** Verfahren nach Anspruch 1, wobei der Mehrfachsprung-Kalibrierungswert (TESM) durch Steigerung des aktuellen Mehrfachsprung-Kalibrierungswertes um einen Additionswert ($\Delta a$), wenn ein neuer Sprung einen Einzelsprung-Normalisierungswert) TE-SA) ergibt, der größer ist als ein vorbestimmter Bezugswert (REF), oder durch Verringerung des aktuellen Mehrfachsprung-Kalibrierungswertes um einen Subtraktionswert ($\Delta d$), wenn ein neuer Sprung einen Einzelsprung-Normalisierungswert schafft, der kleiner ist als der vorbestimmte Bezugswert (REF).

**9.** Verfahren nach Anspruch 8, wobei der Additionswert ($\Delta a$) und der Subtraktionswert ($\Delta d$) vorbestimmte konstante Werte sind.

**10.** Verfahren nach Anspruch 8, wobei der Additionswert ($\Delta a$) und der Subtraktionswert ($\Delta d$) zu der Differenz zwischen dem aktuellen Einzelsprung-Normalisierungswert und dem Bezugswert (REF) proportional sind.

**11.** Verfahren nach Anspruch 8, wobei der Additionswert ($\Delta a$) und der Subtraktionswert ($\Delta d$) einander gleich sind.

**12.** Verfahren nach Anspruch 1, wobei dieses Verfahren die nachfolgenden Verfahrensschritte umfasst:

a) das Starten einer Lese- oder Schreibprozedur;
b) das Schaffen eines Anfangswertes für einen Mehrfachsprung-Kalibrierungswertes (TESM);
c) das Schaffen von Additions- und Subtraktionswerten ($\Delta a$, $\Delta d$);
d) falls für die Lese- oder Schreibprozedur erforderlich, das Durchführen eines Sprunges in eine Zielspur;
e) während des Sprunges das Durchführen von Kalibrierungsmessungen, und am Ende des Sprunges das Schaffen eines Einzelsprung-Normalisierungswertes (TESA);
f) falls der Einzelsprung-Normalisierungswert (TESA) höher ist als ein bezugswert (REF), das Steigern des Mehrfachsprung-Kalibrierungswertes (TESM) um einen Additionswert ($\Delta a$), oder, falls der Einzelsprung-Normalisierungswert (TESA) niedriger ist als der Bezugswert (REF), das Verringern des Mehrfachsprung-Kalibrierungswertes (TESM) um den Subtraktionswert ($\Delta d$).

**13.** Verfahren nach Anspruch 12, wobei der Additionswert ($\Delta a$) dem Subtraktionswert ($\Delta d$) nahezu entspricht.

**14.** Verfahren nach Anspruch 1, wobei in jedem Sprung der Einzelsprung-Normalisierungswert (TESA) auf Basis einer Anzahl Spurübergänge während dieses Sprungs berechnet wird.

**15.** Plattenlaufwerk (1) zum Schreiben oder Auslesen eines optischen Platte (2) wobei dieses Laufwerk Folgendes umfasst:

- Mittel (4) zum Empfangen und Drehen der optischen Platte (2);
- ein Lichtbündelerzeugungsmittel (31) zum Erzeugen eines Lichtbündels (32);
- eine Linse (34) zum Fokussieren des Lichtbündels zu einem Fokussierungspunkt (F) auf der Platte;
- einen optischen Detektor (35) zum Empfangen des Lichtbündels, wie dieses an der Platte reflektiert wird, und zum Erzeugen eines Lesesignals ($S_R$),
- ein radiales Stellglied (51) zur radialen Verlagerung der Linse (34) gegenüber der Platte;
- eine Steuerschaltung (90) mit einem Lesesignaleingang (95) zum Empfangen des Lesesignals ($S_R$) von dem optischen Detektor (35), und mit einem ersten Ausgang (91), der mit einem Steuereingang des radialen Stellgliedes (51) gekoppelt ist;

wobei die Steuerschaltung (90) zum Durchführen der nachfolgenden Verfahrensschritte vorgesehen ist:

(a) im normalen Betrieb (Ausleseprozess; Schreibprozess) das Empfangen eines Lesesignals ($S_R$) von einem optischen Detektor (35);
(b) das Herleiten eines Spurfolgefehlersignals TES aus dem Lesesignal ($S_R$),
(c) das Antreiben des radialen Stellgliedes (51), damit der Fokussierpunkt (F) einen Sprung aus einer aktuellen Spur in eine Zielspur durchführt; **dadurch gekennzeichnet,**

**dass** die Steuerschaltung (90) zum Durchführen der nachfolgenden Verfahrensschritte vorgesehen ist;
(d) **dass** am Ende des Sprunges ein Einzelsprung-Normalisierungswert TESA berechnet wird, der ein Wert ist, der die Amplitude, TESmax - TESmin, des Spurfolgefehlersignals TES darstellt, erfahren während des Sprunges, wobei TESmax und TESmin der maximale bzw. minimale Wert des Spurfolgefehlersignals TES ist, erfahren während des Sprunges;
(e) **dass** die Verfahrensschritte (c) und (d) wiederholt werden, und zwar zum Erhalten von Einzelsprung-Normalisierungswerten TESA(i);
(f) **dass** ein Mehrfachsprung-Kalibrierungswert TESM als eine Annäherung des Mittelwertes des Beitrags von Einzelsprung-Normalisierungswerten TESA(i) berechnet wird;
(g) **dass** in einer Spurfolgemode ein normalisiertes Spurfolgefehlersignal TESN entsprechend der Formel TESN = TES/TESM berechnet wird;

wobei aus dem normalisierten Spurfolgefehlersignal TESN ein radiales Steuersignal S$_{CR}$) berechnet wird; und wobei das radiale Steuersignal (S$_{CR}$) zur Steuerung des radialen Stellgliedes (51) zum Reduzieren des Spurfolgefehlers benutzt wird.

**16.** Plattenlaufwerk (1), vorgesehen zum Durchführen des Verfahrens nach einem der Ansprüche 1 bis 15.

**Revendications**

**1.** Procédé destiné à commander un actionneur radial (51) dans un lecteur de disque optique (1), comprenant les étapes consistant à :

(a) pendant le fonctionnement normal (processus de lecture ; processus d'écriture), recevoir un signal de lecture (S$_R$) d'un détecteur optique (35) ;
(b) dériver du signal de lecture (S$_R$) un signal d'erreur de suivi TES ;
(c) effectuer un saut d'une piste actuelle à une piste cible ; **caractérisé par** :
(d) à la fin du saut, calculer une valeur de normalisation d'un saut TESA, qui est une valeur représentant l'amplitude, TESmax - TESmin, du signal d'erreur de suivi TES, rencontré pendant le saut, dans lequel TESmax et TESmin sont respectivement les valeurs maximale et minimale du signal d'erreur de suivi TES rencontré pendant le saut ;
(e) répéter les étapes (c) et (d) pour obtenir une pluralité de valeurs de normalisation d'un saut TESA(i) ;
(f) calculer une valeur d'étalonnage de sauts multiples TESM en tant qu'approximation de la moyenne de la contribution de valeurs de normalisation d'un saut TESA(i) ;
(g) dans un mode de suivi de piste, calculer un signal d'erreur de suivi normalisé TESN selon la formule TESN = TES/TESM ;
calculer à partir du signal d'erreur de suivi normalisé TESN un signal de commande radial (S$_{CR}$) ; et
utiliser le signal de commande radial (S$_{CR}$) pour commander l'actionneur radial (51) de manière à réduire l'erreur de suivi.

**2.** Procédé selon la revendication 1, dans lequel un processus de lecture de disque ou un processus d'écriture de disque est exécuté entre des sauts respectifs.

**3.** Procédé selon la revendication 1, comprenant en outre les étapes consistant à:

- dans un mode de suivi de piste, calculer un signal d'erreur de suivi (TES), et
- calculer un signal d'erreur de suivi normalisé (TESN) sur la base du signal d'erreur de suivi (TES) et de la valeur d'étalonnage de sauts multiples (TESM).

**4.** Procédé selon la revendication 3, comprenant en outre les étapes consistant à:

- effectuer un saut d'une piste actuelle à une piste cible ;
- calculer une valeur de normalisation d'un saut (TESA) correspondant à ce saut ;
- mettre à jour la valeur d'étalonnage de sauts multiples (TESM) sur la base de cette valeur de normalisation d'un saut (TESA) ;
- reprendre le mode de suivi de piste ;
- dans ce mode de suivi de piste repris, calculer un signal d'erreur de

suivi (TES), et

- calculer un signal d'erreur de suivi normalisé (TESN) sur la base du signal d'erreur de suivi (TES) et de la valeur d'étalonnage de sauts multiples mise à jour (TESM).

**5.** Procédé selon la revendication 1, dans lequel les valeurs réelles des valeurs de normalisation d'un saut (TESA(i)) sont mémorisées à des emplacements de mémoire respectifs (311-319) d'une mémoire (310), et dans lequel la valeur d'étalonnage de sauts multiples (TESM) est calculée sur la base d'un nombre prédéterminé (N) de valeurs mémorisées en mémoire, N étant supérieur à 1, N étant de préférence de l'ordre de 10 ou plus.

**6.** Procédé selon la revendication 5, dans lequel ladite mémoire (310) est mise en oeuvre en tant que mémoire de décalage, son entrée recevant la valeur de normalisation d'un saut la plus récente (TESA) ;
et dans lequel, après chaque saut, le contenu de ladite mémoire (310) est décalé d'une place.

**7.** Procédé selon la revendication 1, dans lequel, après chaque saut, la valeur d'étalonnage de sauts multiples (TESM) est mise à jour en augmentant la valeur d'étalonnage de sauts multiples (TESM) si la nouvelle valeur de normalisation d'un saut (TESA) est supérieure à une valeur de référence prédéterminée (REF) ou en réduisant la valeur d'étalonnage de sauts multiples (TESM) si la nouvelle valeur de normalisation d'un saut (TESA) est inférieure à la valeur de référence prédéterminée (REF).

**8.** Procédé selon la revendication 1, dans lequel la valeur d'étalonnage de sauts multiples (TESM) est calculée en augmentant la valeur d'étalonnage de sauts multiples actuelle d'une valeur d'addition ($\Delta a$) si un nouveau saut fournit une valeur de normalisation d'un saut (TESA) supérieure à une valeur de référence prédéterminée (REF), ou en réduisant la valeur d'étalonnage de sauts multiples actuelle d'une valeur de soustraction ($\Delta d$) si un nouveau saut fournit une valeur de normalisation d'un saut inférieure à la valeur de référence prédéterminée (REF).

**9.** Procédé selon la revendication 8, dans lequel la valeur d'addition ($\Delta a$) et la valeur de soustraction ($\Delta d$) sont des valeurs constantes prédéterminées.

**10.** Procédé selon la revendication 8, dans lequel la valeur d'addition ($\Delta a$) et la valeur de soustraction ($\Delta d$) sont proportionnelles à la différence entre la valeur de normalisation d'un saut actuelle et la valeur de référence (REF).

**11.** Procédé selon la revendication 8, dans lequel la valeur d'addition ($\Delta a$) et la valeur de soustraction ($\Delta d$) sont égales l'une à l'autre.

**12.** Procédé selon la revendication 1, comprenant les étapes suivantes :

a) démarrer une procédure de lecture ou d'écriture ;
b) fournir une valeur initiale pour la valeur d'étalonnage de sauts multiples (TESM) ;
c) fournir des valeurs d'addition et de soustraction ($\Delta a$, $\Delta d$)
d) si la procédure de lecture ou d'écriture l'exige, effectuer un saut à une piste cible ;
e) pendant le saut, effectuer des mesures d'étalonnage, et à la fin du saut, fournir une valeur de normalisation d'un saut (TESA) ;
f) si la valeur de normalisation d'un saut (TESA) est supérieure à une valeur de référence (REF), augmenter la valeur d'étalonnage de sauts multiples (TESM) de la valeur d'addition ($\Delta a$) , ou, si la valeur de normalisation d'un saut (TESA) est inférieure à la valeur de référence (REF), réduire la valeur d'étalonnage de sauts multiples (TESM) de la valeur de soustraction ($\Delta d$).

**13.** Procédé selon la revendication 12, dans lequel la valeur d'addition ($\Delta a$) est approximativement égale à la valeur de soustraction ($\Delta d$) .

**14.** Procédé selon la revendication 1, dans lequel, à chaque saut, la valeur de normalisation d'un saut (TESA) est calculée sur la base d'une pluralité de croisements de piste au cours de ce saut.

**15.** Lecteur de disque (1) pour écrire ou lire un disque optique (2), comprenant : des moyens (4) pour recevoir et faire tourner le disque optique (2) ;
un moyen de génération de faisceau de lumière (31) pour générer un faisceau de lumière (32) ;
une lentille d'objectif (34) pour focaliser le faisceau de lumière sur un point focal (F) sur le disque ;

un détecteur optique (35) pour recevoir le faisceau de lumière reflété du disque et générer un signal de lecture ($S_R$) ;

un actionneur radial (51) pour déplacer radialement la lentille d'objectif (34) par rapport au disque ;

un circuit de commande (90) ayant une entrée de signal de lecture (95) pour recevoir le signal de lecture ($S_R$) du détecteur optique (35), et une première sortie (91) couplée à une entrée de commande de l'actionneur radial (51) ;

dans lequel le circuit de commande (90) est conçu pour effectuer les étapes suivantes :

(a) pendant le fonctionnement normal (processus de lecture ; processus d'écriture), recevoir un signal de lecture ($S_R$) du détecteur optique (35) ;

(b) dériver du signal de lecture ($S_R$) un signal d'erreur de suivi TES ;

(c) commander à l'actionneur radial (51) d'amener le point focal (F) à effectuer un saut d'une piste actuelle à une piste cible ; **caractérisé en ce que** le circuit de commande (90) est conçu pour effectuer les étapes suivantes :

(d) à la fin du saut, calculer une valeur de normalisation d'un saut TESA, qui est une valeur représentant l'amplitude, TESmax - TESmin, du signal d'erreur de suivi TES, rencontré pendant le saut, dans lequel TESmax et TESmin sont respectivement les valeurs maximale et minimale du signal d'erreur de suivi TES rencontré pendant le saut ;

(e) répéter les étapes (c) et (d) pour obtenir une pluralité de valeurs de normalisation d'un saut TESA(i) ;

(f) calculer une valeur d'étalonnage de sauts multiples TESM en tant qu'approximation de la moyenne de la contribution de valeurs de normalisation d'un saut TESA(i) ;

(g) dans un mode de suivi de piste, calculer un signal d'erreur de suivi normalisé TESN selon la formule TESN = TES/TESM ;

calculer à partir du signal d'erreur de suivi normalisé TESN un signal de commande radial ($S_{CR}$) ; et

délivrer le signal de commande radial ($S_{CR}$) à sa première sortie (91) pour commander l'actionneur radial (51) de manière à réduire l'erreur de suivi.

16. Lecteur de disque (1) apte à effectuer le procédé selon l'une quelconque des revendications 1 à 15.

FIG. 1

FIG.2A

FIG.2B

FIG.3

FIG.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5504726 A

- US 5926445 A